# EUROPEAN PATENT SPECIFICATION

(11) **EP 4 211 764 B1**
(45) Date of publication and mention of the grant of the patent: **22.01.2025**
(21) Application number: 21783350.8
(22) Date of filing: 10.09.2021
(51) Int. Cl.: H02G 3/04, B60L 53/31

(54) **COLUMN CHARGING SYSTEM FOR ELECTRIC VEHICLES**
SÄULENLADESYSTEM FÜR ELEKTROFAHRZEUGE
SYSTÈME DE CHARGE EN COLONNE POUR VÉHICULES ÉLECTRIQUES

(30) Priority: 10.09.2020 IT 202000021445
(43) Date of publication of application: 19.07.2023
(73) Proprietor: ENEL X WAY S.R.L., 00189 Roma (RM) (IT)
(72) Inventor: GUADAGNO, Michele, 84133 Salerno SA (IT); PACE, Alessio, 00191 Roma RM (IT); VALENTINETTI, Tiziano, 00191 Roma RM (IT)
(74) Representative: Manna, Sara
(86) International application number: PCT/IB2021/058233
(87) International publication number: WO 2022/053992

(56) References cited:
- CN-A- 108 734 878
- CN-U- 208 615 741
- CN-U- 208 615 741
- DE-A1- 102009 001 721
- DE-A1- 102009 001 721
- DE-A1- 102009 016 505
- DE-A1- 102009 016 505
- DE-A1- 102010 027 050
- DE-A1- 102010 027 050

## Description

### Technical field of the invention

The present invention relates to a column charging system for electric vehicles, in particular to aa ground-mounted charging station.

### Background

The column charging stations generally provide an elongated main structure equipped with at least a charging terminal configured to be connected to an electric vehicle to be charged, and a connection portion configured to be connected to the mains power supply. Inside the main structure the so-called station's "electronics" is installed, that is the set of electric and electronic portions allowing to convey the current from the mains power supply to the charging terminal. The main structure has a longitudinal extension and it can be installed on the ground so as to form a column coming out from the resting plane.

The known column charging systems provide a fixed installation to face the security needs required by regulations. To this purpose one refers to the *Ingress Protection (IP)* parameter defined by IEC 60529 International standard (published by the International electrotechnical committee), which classifies and evaluates the protection level provided by mechanical casings and electrical cabinets against the intrusion of solid particles (such as body parts and powder) and liquid access. The fixed installation allows to reach an IP value so as to guarantee safety both in the system operation and in the maintenance steps. The fixed installation provides to connect the structure to the power supply by means of a terminal block with *crimped* terminals, that is whose edges are modified so as to adhere to the main power supply cable. The stations for public and private use mounted on a horizontal plane or road walkway frequently fall into this case.

The fixed-installed stations require quite complex and articulated interventions, both as to the implementation and to maintenance. In fact, the installation of a charging station on a horizontal plane requires the coordination of several professional figures. At first it is necessary to implement an excavation to detect the seat of the charging station. Subsequently to the excavation, it is necessary to implement a foundation plinth to position then and to anchor the charging station. At this point a specialized technician connects the power cables to the inside of the terminal block and lifts the upstream switch to provide power to the station. The charging station generally has a door for accessing the terminal block and electronics, therethrough qualified and specialized personnel can perform replacement and maintenance interventions.

During maintenance of these charging stations, the presence of a specialized technician enabled to work under voltage is required (PES, PAV, PEI figures introduced by Rule CEI 11-27).

At present, the extraordinary and ordinary maintenance and the replacement of the components in the charging columns for the electric vehicles intended to the public use is performed by specialized personnel (PES, PAV, PEI) since the connection to the mains power supply is permanent. High costs, long periods of time and need for coordinating several figures on the working site or on the temporary construction site are linked thereto.

In a typical scenario for replacing a component, a skilled worker is sent to the field, he/she disconnects the charging station from power supply on an upstream cabinet, he/she opens the station and performs the replacement. Downstream of the malfunction signalling the company in charge of maintenance has to engage specialized figures, usually present in limited number, and coordinate their procedure on several sites depending on priority.

The access to the "fixed" column systems is implemented by means of a door obtained in the main structure for accessing the electric protections and the internal components. The door is a critical point of the structure since over time it could lose the IP protection level required by regulations due to the continuous opening and closing leading to tear the gasket. This event is more frequent the larger is the door or depending upon its geometry. The IP level is guaranteed by the tightening torques of the screws sealing the door. Such torque is guaranteed during the production step by means of using torque wrenches, but which could be not met during the maintenance step. The product having a door to keep the IP level generally have a shorter useful life.

There are systems providing a half-movable installation, wherein the main connection is fixed but it is possible to separate the charging station from the power supply by means of a connector. The stations for public and private use which are mounted on the wall, that is the charging stations with installation not fixed to the wall or on a vertical plane, frequently fall into this field. In this case the station consists of two portions:
1. a rear portion containing the elements anchoring to the wall, the terminal block for connection to the mains and a female connector;
2. a front portion inside thereof the electronics is contained, connecting to the mains through the male connector placed on the back.

Generally, the connectors mounted on the latter type of stations are not capable, on their own, to guarantee an adequate protection to the intrusion of powder and liquids. To this purpose one refers to the *Ingress Protection (IP)* parameter defined by the IEC 60529 International standard (published by the International electrotechnical committee), which classifies and evaluates the protection level provided by mechanical casings and electrical cabinets against the intrusion of solid particles (such as body parts and powder) and liquid access.

The connectors mounted on the known stations do not allow to reach the minimum admissible IP44 level introduced by IEC 61851-1 regulation. In order to obtain such protection level, it is necessary that the station is equipped with one or more gaskets, the connector having to be protected inside thereof.

Consequently, in the column stations, where a high IP level is required, the use of connectors used in the wall stations is not recommended.

The known column charging stations, then, are currently implemented according to the above-described, long and burdensome first approach, but capable of guaranteeing the required IP level. CN208615741U discloses a charging column according to the preamble of claim 1.

### Summary of the invention

The technical problem placed and solved by the present invention is then to provide a column charging station for electric vehicles allowing to obviate the drawbacks mentioned above with reference to the known art.

Such problem is solved by a column charging system for electric vehicles according to claim 1.

Preferred features of the present invention are set forth in the depending claims.

The present invention provides some important advantages. The main advantage consists in that the column charging system is simple to be installed and easy to be assembled/disassemble in case of maintenance.

The devised column charging system, moreover, guarantees the following advantages of:
- introducing a quick connection system for the charging stations in public field on horizontal plane (road, walkway and the like);
- guaranteeing the IP protection level of the product;
- separating the implementation of the civil works from the electric works during installation by reducing the interference between several companies;
- replacing easily and intuitively, the presence of (PES PAV PEI) specialized personnel is not requested;
- reducing maintenance costs and time;
- the presence of a door for accessing electronics and electromechanics is no more required, in this way it is also possible to extend the useful life of the product;
- the product can be modified easily in shapes and electric and electronical features provided that the base structure remains unchanged.

The present invention involves several and evident advantages with respect to the known art which, together with the features and use modes of the present invention, will result evident from the following detailed description of preferred embodiments thereof, shown by way of example and with not limitative purposes.

### Brief description of figures

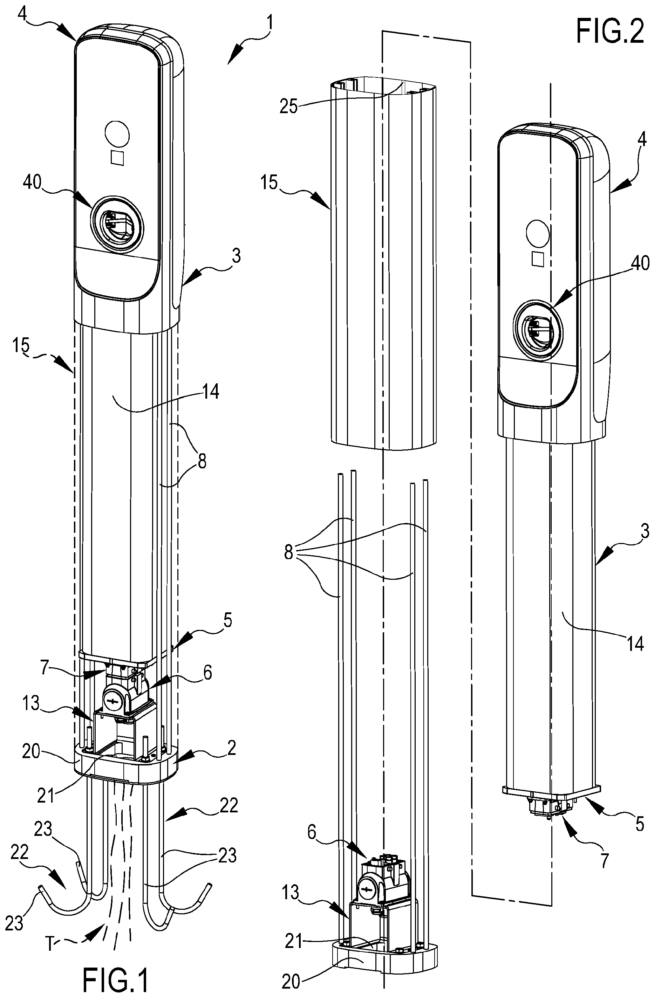

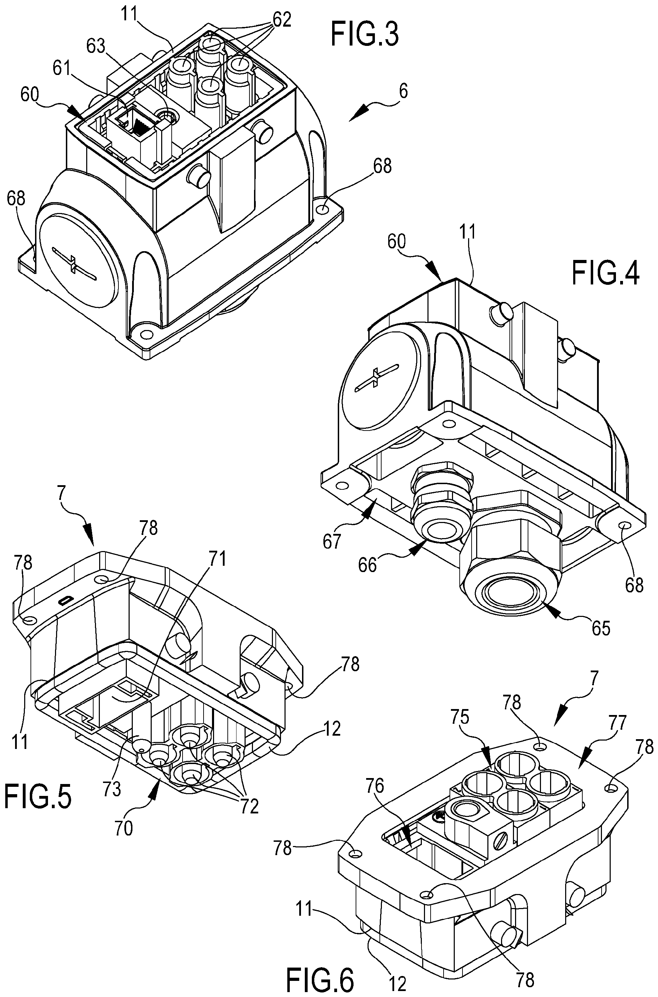

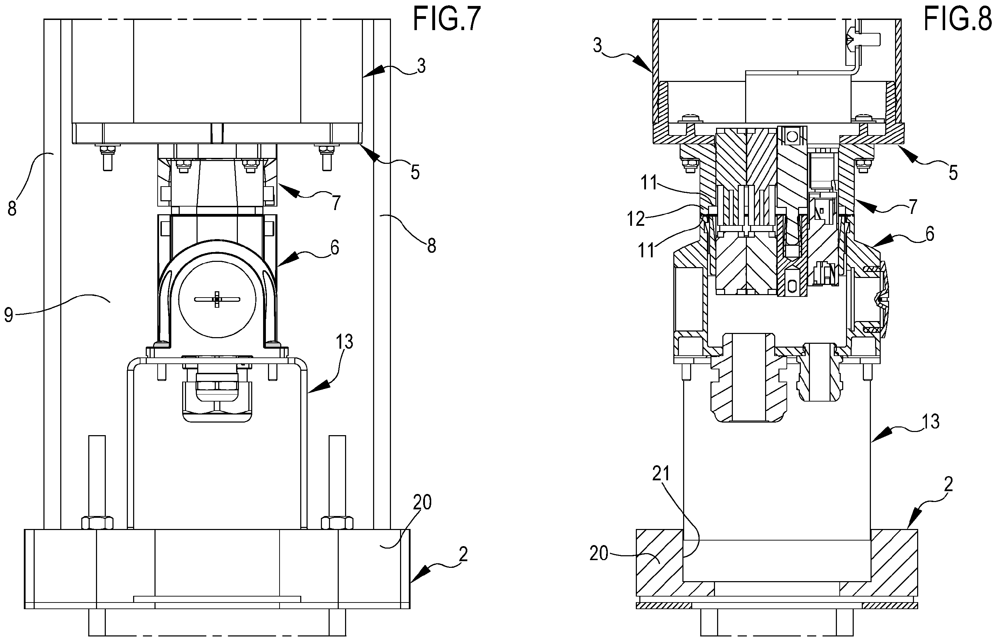

The figures of the enclosed drawings will be referred to, wherein:
▪ Figure 1 shows an axonometric view of a charging system according to the present invention;
▪ Figure 2 shows a partially exploded axonometric view of a charging system according to the present invention;
▪ Figures 3 and 4 show axonometric views of a detail of a charging system according to the present invention;
▪ Figures 5 and 6 show axonometric views of another detail of a charging system according to the present invention;
▪ Figure 7 shows a lateral section view of a detail of the charging system according to the present invention;
▪ Figure 8 shows a lateral section view along a median plane of the charging system according to the present invention.

The thicknesses and the curves represented in the above-mentioned figures are to be meant as purely exemplifying, not necessarily shown in proportion.

### Detailed description of preferred embodiments

A preferred embodiment and possible variants of the invention will be described hereinafter, and this with reference to the above-introduced figures.

Analogous components are designated in the several figures with the same numeral reference.

Moreover, the several embodiments and variants described hereinafter are subjected to be used in combination, where compatible.

By firstly referring to Figure 1, according to an embodiment of the invention, a column charging system for electric vehicles is designated a whole with 1. The system 1, since it is a column system, has a substantially vertical main development with respect to a resting plane.

The system 1 comprises a base portion 2 intended to be fastened on a preferably horizontal plane resting on the ground. In case of sloping grounds, the resting plane will be obtained locally through suitable excavation works. The base portion 2 is configured to obtain a terminal portion T of a mains power supply, in particular power supply cables capable of providing electric energy to the system 1. Preferably, the base portion 2 can include a base socle 20 which can be placed in contact with the resting plane. Usefully, the base portion 2 can include a passage seat 21 configured to make the terminal portion T to pass. The terminal portion T is preferably a bundle of cables connected to the mains power supply. Such cables are arranged in the ground, they outgo from the resting plane and insert in the base portion 2 by means of the passage seat 21. The base portion 2 can advantageously include anchoring means 22 configured to fasten and keep the base portion 2 to the ground. With reference to Figure 1, the anchoring means 22 can include hooked tie elements 23, but technically equivalent alternative solutions are not excluded, for examples foundation slabs or plinths driven into the ground, or other hooking systems.

The system 1 according to the present invention, moreover, include a charging device 3 having a top body 4 configured to be connected to an electric vehicle. In particular, the top body 4 can include at least a charging socket 40 configured to receive a charging connector of an electric vehicle. The charging device 3 does further include an elongated body 14 wherein means for conveying electric energy and possible electronic needs and managing and controlling units, configured to control and manage the electric energy supply to a vehicle to be charged, may be included. The cross section of the elongated body 14 has smaller sizes than the cross section of the top body 4, the latter evaluated in the point wherein the elongated body 14 and the top body 4 join. With reference to the embodiment illustrated in figures, the elongated body 14 has a substantially prismatic shape, in particular it has a quadrilateral section, with substantially constant development along the main development longitudinal direction, which in use is vertical. Solutions providing different shapes, for example prismatic with polygonal section, even with variable cross section, are not excluded.

The charging device 3 further comprises a bottom end 5 in opposite position with respect to the top body 4, preferably comprised in the elongated body 14, at its free lower terminal end. The bottom end 5 is positioned in use near the base portion 2 and configured to convey electricity from the terminal portion T to the top body 4. In a preferred embodiment, the bottom end 5 is of the type of a plate placed to close the charging device 3, at the lower terminal end of the elongated body 14. In particular, the bottom end 5 is configured to convey electric energy to the conveying means inserted in the elongated body 14, the latter being connected to the charging socket 40.

The system 1 according to the invention comprises at least two connectors designated with the reference numbers 6 and 7: a female connector 6 and a male connector 7. It is useful to specify that the terms "male" and "female" are purely conventional, used to designate the complementarity of connectors in optics of a coupling and/or attachment and/or fitting aimed at implementing an electric connection. One of the two connectors 6, 7 is fastened to the base portion 2 in a predetermined position and connected to the terminal portion T, whereas the other connector is fastened to the bottom end 5 and electrically connected to the top body 4. The female connector 6 is fastened to the base portion 2 in a predetermined position and connected to the terminal portion T, whereas the male connector 7 is fastened to the bottom end 5 and electrically connected to the top body 4. The equivalent solution wherein the male connector 7 is fastened to the base portion 2 in a predetermined position and connected to the terminal portion T, whereas the female connector 6 is fastened to the bottom end 5 and electrically connected to the top body 4 is not part of the invention.

The female connector 6 and the male connector 7 are coupled according to a quick-fitting configuration. In other words, the connectors 6, 7 are shaped wholly complementary to one another.

In particular, as for example illustrated in Figures 3 to 6, the female connector 6 and the male connector 7 can include each one a contact edge 11 complementary to each other. The contact edges 11 of each connector mate and define a perimeter which is identical both for the female connector 6, and for the male connector 7. Usefully, each connector 6, 7 can be equipped with relative contact portions 60, 70 complementary to one another, each one equipped with the contact means 61, 62, 63, 71, 72, 73 configured to be coupled to implement an electric and/or mechanical connection between the connectors 6, 7.

Usefully, the contact means 61, 62, 63, 71, 72, 73 can be connecting terminals having an internal portion made of conductive material, and an external portion made of an insulating material. Advantageously, the external portion can be made of plastic material, preferably polycarbonate or Acrylonitrile Butadiene Styrene (ABS).

Preferably, the contact means 61, 62, 63, 71, 72, 73 can be modular and interchangeable connection terminals, that is they can cover different use cases, for example it is possible to replace two of the terminals to obtain a single-phase solution or it is possible to add a solution with *multimode duplex SC* fibre or the like.

In the embodiment illustrated in figures, the female connector 6 can include a contact portion 60 surrounded by the contact edge 11 and equipped with at least a first contact element 61, for example a RJ-45 port element, or commonly known as ethernet port, used to enable the column to a data connection. Usefully the contact portion 60 can include a plurality of second contact elements 62, for example connection terminals for the three power supply phases and the neutral. Preferably, the contact portion 60 can include a third contact element 63, for example a ground terminal.

Analogously, the male connector 7 can include a contact portion 70 surrounded by the contact edge 11 and equipped with at least a first contact element 71 configured to be coupled to the first contact element 61, for example to the RJ-45 port. Usefully the contact portion 70 can include a plurality of second contact elements 72 configured to be coupled to respective second contact elements 62, for example the terminals for the three power supply phases and the neutral. Preferably, the contact portion 70 can include a third contact element 73 configured to be coupled to the third contact element 63, for example the ground terminal. Even in this case the terminals can be interchangeable with the purpose of implementing different solutions.

Advantageously, at least one between the female connector 6 and the male connector 7 can include a gasket-like element 12 interposed in contact between the contact edges 11. The configuration is so that in an operating position (see Figures 7 and 8) the contact edges 11 transmit compression forces on the gasket-like element 12. In fact, since the system 1 is a column system, the charging device 3 discharges its own weight on the base portion 2 through the connectors 6, 7. In this way, the coupling between the connectors 6, 7 results to be resistant to infiltration of liquids and powders, by guaranteeing a high IP level. Usefully, the gasket-like element can have an identical shape to the peripheral edge 11, so as to guarantee a sealing along the whole contact perimeter between the connectors 6, 7. The stirrup 13 can be implemented so as to discharge elastically the exceeding forces acting on the quick-fitting connector.

The male connector 7 can be usefully fastened to the bottom end 5 at a fastening portion 77 opposed to the contact edge 11. On the fastening portion 77 connection holes 78 can be usefully obtained, configured to house connection elements such as screws, bolts or other devices capable of fastening the male connector 7 to the bottom end 5. Connection elements 75, 76 emerge from the fastening portion 77, which elements are configured to be connected to the conveying means with the purpose of transferring electric energy to the top body 4.

The female connector 6 can be usefully fastened to the base portion 2 at a fastening portion 67 opposed to the contact edge 11. Analogously to above, even on the fastening portion 67 connection holes 68 can be usefully obtained, configured to house connection elements such as screws, bolts or other devices capable of fastening the female connector 6 to the base portion 2. Terminal connectors 65, 66 emerge from the fastening portion 67, which connectors are configured to be connected to the terminal portion T and, then, to receive electric energy from the mains power supply.

Advantageously, the base portion 2 can include a supporting stirrup 13 whereon the female connector 6 can be fastened. The supporting stirrup 13 can be usefully raised with respect to the resting plane and configured to transmit load stresses from the female connector 6 to the resting plane itself. Preferably, the supporting stirrup 13 can be substantially centred with respect to the section of the base portion 2. In this way, the distribution of the loads results to be balanced geometrically on the base portion 2. Usefully, the supporting stirrup 13 can be positioned above the passage seat 21, so as to favour the connection between the terminal portion T and the female connector 6. Advantageously, the supporting stirrup 13 can have an overturned U-like shape. The supporting stirrup 13 allows to balance the loads by avoiding the failure or rupture of the female connector 6 and/or possible disconnections between terminals in the moment wherein the force exerted on the object should overcome the sustainable one. In a preferred embodiment, the stirrup 13 can be a belt plate made of stainless steel or aluminium or directly moulded in a thermoplastic material. The unique limitations on the material type are the elasticity feature which has to intervene to discharge the exceeding forces on the quick connector 6, 7 and the resistance to corrosion, since the stirrup 13 can come in contact with water.

Alternative solutions are not excluded wherein the supporting stirrup 13 is implemented with a different shape or wherein instead of the supporting stirrup 13 other technically equivalent structures are provided, for example a spring damper or a pin.

The system 1 according to the invention comprises positioning means 8, 9 of the charging device 3 with respect to the base portion 2.

In particular, the charging device 3 is movable from an inactive position, wherein the bottom end 5 is moved away from the base portion 2, and an operating position wherein the connectors 6, 7 are coupled and connected electrically (see Figures 7 and 8).

The overall configuration is so that, during the passage from the inactive position to the operating position, the charging device 3 is guided by the positioning means 8, 9, the male connector 7 being brought at the female connector 6 until implementing the quick fitting.

In other words, during installation, the charging device 3 is inserted by sliding in the fixed base portion 2, and it is made to slide downwards until implementing the coupling between male connector 7, placed on the fixed base portion 2, and female connector 6, placed on the bottom of the charging device 3.

In order to guarantee greater stability, sealing with respect to water and to make the system 1 anti-theft, the charging device 3 is preferably tightened subsequently, through bolts, on suitable threaded systems (in this case it is a crown with threaded pins) passing through the top of the charging device 3 itself. Advantageously, the positioning means 8, 9 define a path which orients the charging device 3 so that the bottom end 5 and, then, the male connector 7, are brought at the female connector 6 fixed in a predetermined position. In this sense, then, the positioning means 8, 9 act as guide for the charging device 3. In this way the assembly and/or maintenance procedures are eased since the connectors 6, 7 are automatically brought in contact therebetween once the charging device 3 is inserted in the positioning means 8, 9.

Advantageously, the positioning means 8, 9 comprise a plurality of longitudinal elements 8, the side walls thereof constitute at least partially a sliding, or even guiding, surface 9 for the internal surface of the charging device 3. The configuration of the charging device 3 is so that, when it is engaged with the longitudinal elements 8, it is constrained to slide on the sliding surface when passing from the inactive position to the operating position. The longitudinal elements 8 in particular have elongated configuration, and preferably extend along the sliding direction of the charging device 3, which is preferably vertical in use.

In particular, the elongated body 14 has an internal surface shaped to slide on the sliding surface 9, in contact with the latter. In other words, the cross sections of the elongated body and of the sliding surface are inter-penetrating for the whole length of the charging device 3, as far as its top portion. At the height of top, the external sections of the latter and that of the external casing 15 mate, actually limiting the penetration of the top of the charging device 3 inside the casing 15. The longitudinal elements 8 have substantially monodirectional development and, in pair, define guiding rails. In other words, the longitudinal elements 8 are arranged to create a parallelepiped-shaped constraint spatial region, and they are further supported in their function by the outer casing 15. By selecting suitable coupling tolerances, it is possible to make to slide easily the charging device 3 as far as the point in which the quick-fitting connector couples. In this position, the top of the charging device 3 and the fixed base portion 2 are perfectly aligned (in vertical direction, coinciding with the main development direction of the longitudinal elements 8) and show the same surface of the base plane, that is resulting coincident in a plan view.

It is not possible to make an error in inserting the charger into the outer casing due to presence of a Poka-Yoke (or anti-error system). Even the morphology of the quick-fitting connector does not allow the coupling between the male portion and the female portion if it is not inserted in the right direction.

At the end of the longitudinal elements 8 preferably there are two threaded pins, configured to insert in the top portion of the charging device 3, allowing to tight the latter to the structure by means of bolts.

In particular, the longitudinal elements 8 are fastened to the base portion 2 so as to surround the female connector 6. In this way, the sliding surface 9 can convey the bottom end 5 and the male connector 7 near the female connector 6.

More particularly, the longitudinal elements 8 extend going out from the base portion 2 for a length so that, in the operating position, they are at least partially inserted in the top body 4.

Advantageously, the system 1 can include means for tightening the longitudinal elements 8 to the top body 4. In a preferred embodiment, the tightening means, not illustrated in Figures as hidden, comprises tightening elements, for example bolts or nuts, which can be screwed to the end of the longitudinal elements 8 inserted in the top body 4. By tightening the tightening means, a traction force transmits along the longitudinal elements 8 which tend to push the base portion 2, and then the female connector 6, towards the male connector 7. In this way an additional compression force is exerted on the gasket-like element 12 which improves the seal thereof and then the IP level.

In a preferred embodiment the system can include four longitudinal elements 8, preferably arranged at the vertexes of the base portion 2, but alternative embodiments are not excluded wherein there is a different number of longitudinal elements 8, or wherein the same are arranged in alternative positions.

With reference to Figures, the longitudinal elements 8 are in number equal to 4 and they are placed at the angles of the perimeter delimited by the base portion 2, raising from here in substantially vertical direction. The longitudinal elements 8 can be made of stainless steel and be configured so as to act even as tie rods for the structure of the system 1, by sustaining the same in the traction efforts. The use of the stainless steel or other material resistant to corrosion allows to face a possible exposure to water.

The positioning means 8, 9 can include an additional guiding element 25, the configuration being such that this additional guiding element defines a system of *"poka-yoke"* type with unique coupling. In this way the assembly of the system results to be error-proof, that is it is not possible to commit an error in inserting the charging device 3.

In a preferred embodiment, for example illustrated in Figure 2, the additional guiding element 25 can be of the type of an invitation groove intended to couple with a relative coupling element, for sake of simplicity not illustrated in figures, of the charging device 3. In this way the assembly of the system 1 results to be eased, since the possibilities of committing errors in positioning the charging device are reduced to the minimum.

The system 1 does include a casing 15 surrounding the positioning means 8, 9. Usefully the casing is interposed and interposed in contact between the top body 4 and the base portion 2. Preferably the casing 15 surrounds externally the longitudinal elements 8 and the elongated body 14.

The configuration is so that the cross section of the casing 15 mates with the section of top body 4. Analogously, the cross section of the casing 15 mates with the perimeter of the base portion 2. In this way the system 1 results to be more compact and geometrically continuous.

Advantageously, the top body 4 and the casing 15 are placed in contact, by defining a watertight coupling.

Analogously, even the base portion 2 and the casing 15 are placed in contact, by defining a watertight coupling.

With reference to a preferred embodiment, for example illustrated in Figures, the casing 15 has a quadrilateral section at the angles thereof the longitudinal elements 8 are arranged. In this way the casing 15 and the longitudinal elements 8 interact therebetween by providing a high mechanical resistance to stresses. The system 1 then results particularly resistant to impacts, and the electronic components present in the charging device 3 are additionally protected.

In conclusion, the system 1 allows in an easy and smooth way an immediate locking and unlocking of the charging device 3. The locking is implemented by making to slide the elongated body 14 through the positioning means 8, 9 inside the casing 15. The positioning means 8, 9, formed by a series of longitudinal elements 8 defining sliding rails, has the function of stabilizing and centring the terminals of the quick-fitting male connector 7 with those of the female connector 6. The coupling is unique. Once obtained the coupling it is possible to tighten the charging device 3 through tightening means, in particular through a series of screws placed in the top body 4 and hidden by a door.

The system 1 is capable of protecting the charging station against powder and against water jets (minimum IP55). Such protection is obtained through the gasket-like element 12 placed on one of the contact edges 11 of the connectors 6, 7. In order to operate at best, a minimum force of 10 N and a maximum force of 700 N has to be exerted on the gasket-like element 12. The force exerted on the latter comes partially from the weight of the overlying charging device 3 and partially from the effect of the tightening means placed in the top body. There is then a synergic effect between the tightening means and the positioning means 8, 9 since they contribute to exert the right compression force on the gasket-like element 12. The positioning means 8, 9 in fact stabilize and position the charging device 3, by allowing to discharge the weight on the gasket-like element 12.

The supporting stirrup 13 defines an elastic force discharge system (partially constituted by the yoke of the lower cover made of rubber of the charging device 3 and partially by the elasticity of the supporting stirrup 13 whereon the female connector is assembled) allows to balance the structure by avoiding the failure or rupture of the connectors and/or possible disconnections between the terminals when the force exerted thereon should overcome the sustainable one.

Differently from the solutions currently on the market, which limit the wall installation, the connectors 6, 7 do not require to be hidden or protected in internal structures, since they can maintain the required IP protection level.

Consequently, differently from the wall installations, the connectors 6, 7 can be exposed to bad weather, for example to partial flooding and then they can be used in column charging stations installed on road plans outside.

The system 1 eases and speeds-up considerably the maintenance and installation of the charging stations for the electric vehicles. In fact, it will not be required any more to follow a maintenance iter as complicated as the current one: disconnecting the system, opening a door, accessing the terminal block, disconnecting the terminals, performing maintenance, reconnecting, reclosing and re-supplying. It will simply require to unscrew the tightening means and to extract the charging device 3 vertically. The extraction can be performed easily by one person. The overall weight of the charging device is usefully lower than 10 Kg. Then, the presence of a (PES PAV PEI) operator qualified to operate under voltage is no more requested, further reducing the replacement and maintenance costs. Consequently, it is possible to reduce to one third the current replacement and maintenance costs, with the purpose of encouraging the massive installation of charging infrastructures for the electric vehicles.

The present invention has been sofar described with reference to a preferred embodiment. It is to be meant that each one of the technical features implemented in the preferred embodiment, herein described by pure way of example, can advantageously be combined, differently from what described, even with other features, to create additional embodiments belonging to the same inventive core too. It is then to be meant that other embodiments belonging to the same inventive core may exist, as defined by the protective scope of the herebelow reported claims.

## Claims

1. A column charging system (1) for electric vehicles comprising:
- a base portion (2) intended to be fastened on a plane resting on the ground and configured to receive a terminal portion (T) of a main power supply;
- a charging device (3) having a top body (4), configured to be connected to an electric vehicle, and a bottom end (5), opposite to said top body (4), the bottom end (5) being positioned close to said base portion (2) and configured to convey electricity from said base portion (2) to said top body (4);
- at least a female connector (6) fastened to said base portion (2) in a predetermined position and configured to be connected to said terminal portion (T), and at least a male connector (7) fastened to said bottom end (5) and electrically connected to said top body (4),
wherein said female connector (6) and said male connector (7) are shaped wholly complementary to one another, so as to be able to be coupled according to a quick-fitting configuration;
- means (8, 9) for positioning said charging device (3) with respect to said base portion (2);
said charging device (3) being movable from an inactive position, wherein said bottom end (5) is moved away from said base portion (2), and an operating position, wherein said female connector (6) and said male connector (7) are coupled and connected electrically,
the overall configuration being such that, during the passage from the inactive position to the operating position, said charging device (3) is guided by said positioning means (8, 9), said male connector (7) being brought at said female connector (6) until implementing said quick-fitting configuration,
wherein said positioning means (8, 9) comprises a plurality of longitudinal elements (8) having side walls carrying a sliding surface (9) on which said charging device (3) is constrained to slide in the passage from said inactive position to said operating position, and
wherein said longitudinal elements (8) are fastened to said base portion (2) to be placed around said female connector (6),
**characterized in that**
said column charging system (1) further comprises a casing (15) surrounding said positioning means (8, 9) and interposed in contact between said top body (4) and said base portion (2),
and **in that** said longitudinal elements (8) extend outgoing from said base portion (2) for a length so that, in said operating position, they are at least partially inserted in said top body (4),
and **in that** said charging device (3) comprises an elongated body (14) carrying said bottom end (5), said elongated body (14) having a smaller cross section than the cross section of said top body (4) at a junction point between said elongated body (14) and said top body (4),
and **in that** said elongated body (14) comprises an internal surface configured to slide on said sliding surface (9) in the passage from said inactive position to said operating position.

2. The system (1) according to the preceding claim, wherein said elongated body (14) has a quadrilateral cross section.

3. The system (1) according to one or more of the preceding claims, comprising means for tightening said longitudinal elements (8) to said top body (4).

4. The system (1) according to one or more of the preceding claims, wherein said female connector (6) and said male connector (7) comprise each one a contact edge (11) complementary to each other.

5. The system (1) according to the preceding claim, wherein at least one between said female connector (6) and said male connector (7) comprises a gasket-like element (12) interposed in contact between said contact edges (11), the configuration being such that in said operating position said contact edges (11) transmit compression forces on said gasket-like element (12).

6. The system (1) according to one or more of the preceding claims, wherein said base portion (2) comprises a supporting stirrup (13) thereon said female connector (6) is fixed, raised with respect to said resting plane and configured to transmit load stresses from said female connector (6) to said resting plane.

7. The system (1) according to the preceding claim, wherein said supporting stirrup (13) has an overturned U-like shape.

## Patentansprüche

1. Säulenladesystem (1) für Elektrofahrzeuge, umfassend:
- einen Basisabschnitt (2), der vorgesehen ist, um auf einer Ebene befestigt zu sein, die auf dem Boden liegt, und der konfiguriert ist, um einen Anschlussabschnitt (T) einer Hauptstromversorgung aufzunehmen;
- eine Ladevorrichtung (3), die einen oberen Körper (4), der konfiguriert ist, um mit einem Elektrofahrzeug verbunden zu sein, und ein unteres Ende (5) aufweist, das dem oberen Körper (4) gegenüberliegt, wobei das untere Ende (5) nahe dem Basisabschnitt (2) positioniert ist und konfiguriert ist, um Elektrizität von dem Basisabschnitt (2) zu dem oberen Körper (4) zu transportieren;
- mindestens einen Buchsenverbinder (6), der an dem Basisabschnitt (2) in einer zuvor bestimmten Position befestigt ist und konfiguriert ist, um mit dem Anschlussabschnitt (T) verbunden zu sein, und mindestens einen Steckerverbinder (7), der an dem unteren Ende (5) befestigt ist und mit dem oberen Körper (4) elektrisch verbunden ist,
wobei der Buchsenverbinder (6) und der Steckverbinder (7) vollständig komplementär zueinander geformt sind, um gemäß einer Schnellpasskonfiguration gekoppelt werden zu können;
- Mittel (8, 9) zum Positionieren der Ladevorrichtung (3) hinsichtlich des Basisabschnitts (2);
wobei die Ladevorrichtung (3) von einer inaktiven Position, wobei das untere Ende (5) von dem Basisabschnitt (2) weg bewegt ist, und einer Betriebsposition bewegbar ist, wobei der Buchsenverbinder (6) und der Steckverbinder (7) gekoppelt und elektrisch verbunden sind,
wobei die Gesamtkonfiguration derart ist, dass während des Übergangs von der inaktiven Position in die Betriebsposition die Ladevorrichtung (3) durch das Positionierungsmittel (8, 9) geführt wird, wobei der Steckverbinder (7) an den Buchsenverbinder (6) gebracht wird, bis die Schnellpasskonfiguration implementiert ist,
wobei das Positionierungsmittel (8, 9) eine Vielzahl von Längselementen (8) umfasst, die Seitenwände aufweisen, die eine Gleitoberfläche (9) tragen, auf der die Ladevorrichtung (3) bei dem Übergang von der inaktiven Position in die Betriebsposition gleiten muss, und
wobei die Längselemente (8) an dem Basisabschnitt (2) befestigt sind, um um den Buchsenverbinder (6) platziert zu sein,
**dadurch gekennzeichnet, dass**
das Säulenladesystem (1) ferner ein Gehäuse (15) umfasst, das das Positionierungsmittel (8, 9) umgibt und in Kontakt zwischen dem oberen Körper (4) und dem Basisabschnitt (2) eingeschoben ist,
und **dass** die Längselemente (8) sich über eine Länge von dem Basisabschnitt (2) weg erstrecken, sodass sie in der Betriebsposition mindestens teilweise in den oberen Körper (4) eingesetzt sind,
und **dass** die Ladevorrichtung (3) einen länglichen Körper (14) umfasst, der das untere Ende (5) trägt, wobei der längliche Körper (14) an einem Verknüpfungspunkt zwischen dem länglichen Körper (14) und dem oberen Körper (4) einen kleineren Querschnitt als den Querschnitt des oberen Körpers (4) aufweist,
und **dass** der längliche Körper (14) eine Innenoberfläche aufweist, die konfiguriert ist, um bei dem Übergang von der inaktiven Position in die Betriebsposition auf der Gleitoberfläche (9) zu gleiten.

2. System (1) nach dem vorstehenden Anspruch, wobei der längliche Körper (14) einen vierseitigen Querschnitt aufweist.

3. System (1) nach einem oder mehreren der vorstehenden Ansprüche, umfassend Mittel zum Festziehen der Längselemente (8) an dem oberen Körper (4).

4. System (1) nach einem oder mehreren der vorstehenden Ansprüche, wobei der Buchsenverbinder (6) und der Steckverbinder (7) jeder eine Kontaktkante (11) umfassen, die zueinander komplementär ist.

5. System (1) nach dem vorstehenden Anspruch, wobei mindestens einer zwischen dem Buchsenverbinder (6) und dem Steckerverbinder (7) ein dichtungsartiges Element (12) umfasst, das in Kontakt zwischen den Kontaktkanten (11) eingeschoben ist, wobei die Konfiguration derart ist, dass in der Betriebsposition die Kontaktkanten (11) Kompressionskräfte auf das dichtungsartige Element (12) übertragen.

6. System (1) nach einem oder mehreren der vorstehenden Ansprüche, wobei der Basisabschnitt (2) einen Stützbügel (13) umfasst, auf dem der Buchsenverbinder (6) fixiert ist, wobei er hinsichtlich der liegenden Ebene erhöht ist und konfiguriert ist, um Belastungsspannungen von dem Buchsenverbinder (6) auf die liegende Ebene zu übertragen.

7. System (1) nach dem vorstehenden Anspruch, wobei der Stützbügel (13) eine Form wie ein umgedrehtes U aufweist.

## Revendications

1. Système de charge en colonne (1) destiné à des véhicules électriques comprenant :
- une partie de base (2) prévue pour être fixée sur un plan reposant sur le sol et conçue pour recevoir une partie terminale (T) d'une alimentation en puissance principale ;
- un dispositif de charge (3) ayant un corps supérieur (4), conçu pour être connecté à un véhicule électrique, et une extrémité inférieure (5), opposée audit corps supérieur (4), l'extrémité inférieure (5) étant positionnée près de ladite partie de base (2) et conçue pour transporter de l'électricité de ladite partie de base (2) audit corps supérieur (4) ;
- au moins un connecteur femelle (6) fixé à ladite partie de base (2) dans une position prédéterminée et conçu pour être connecté à ladite partie terminale (T), et au moins connecteur mâle (7) fixé à ladite extrémité inférieure (5) et connecté électriquement audit corps supérieur (4),
dans lequel ledit connecteur femelle (6) et ledit connecteur mâle (7) sont mis en forme de façon totalement complémentaire l'un à l'autre, de façon à pouvoir être accouplés selon une configuration de raccord rapide ;
- un moyen (8, 9) permettant de positionner ledit dispositif de charge (3) par rapport à ladite partie de base (2) ;
ledit dispositif de charge (3) étant mobile entre une position inactive, dans lequel ladite extrémité inférieure (5) est éloignée de ladite partie de base (2), et une position de fonctionnement, dans lequel ledit connecteur femelle (6) et ledit connecteur mâle (7) sont accouplés et connectés électriquement,
la configuration globale étant telle que, pendant le passage de la position inactive à la position de fonctionnement, ledit dispositif de charge (3) est guidé par ledit moyen de positionnement (8, 9), ledit connecteur mâle (7) étant amené au niveau dudit connecteur femelle (6) jusqu'à la mise en oeuvre de ladite configuration de raccord rapide,
dans lequel ledit moyen de positionnement (8, 9) comprend une pluralité d'éléments longitudinaux (8) ayant des parois latérales portant une surface de glissement (9) sur laquelle ledit dispositif de charge (3) est contraint de glisser lors du passage de ladite position inactive à ladite position de fonctionnement, et
dans lequel lesdits éléments longitudinaux (8) sont fixés à ladite partie de base (2) pour être placés autour dudit connecteur femelle (6),
**caractérisé en ce que**
ledit système de charge en colonne (1) comprend en outre une enveloppe (15) entourant ledit moyen de positionnement (8, 9) et intercalée en contact entre ledit corps supérieur (4) et ladite partie de base (2),
et **en ce que** lesdits éléments longitudinaux (8) s'étendent vers l'extérieur de ladite partie de base (2) sur une longueur telle que, dans ladite position de fonctionnement, ils sont au moins partiellement insérés dans ledit corps supérieur (4),
et **en ce que** ledit dispositif de charge (3) comprend un corps allongé (14) portant ladite extrémité inférieure (5), ledit corps allongé (14) ayant une coupe transversale plus petite que la coupe transversale dudit corps supérieur (4) au niveau d'un point de jonction entre ledit corps allongé (14) et ledit corps supérieur (4),
et **en ce que** ledit corps allongé (14) comprend une surface interne conçue pour glisser sur ladite surface de glissement (9) lors du passage de ladite position inactive à ladite position de fonctionnement.

2. Système (1) selon la revendication précédente, dans lequel ledit corps allongé (14) a une coupe transversale quadrilatérale.

3. Système (1) selon l'une ou plusieurs des revendications précédentes, comprenant un moyen permettant de serrer lesdits éléments longitudinaux (8) audit corps supérieur (4).

4. Système (1) selon l'une ou plusieurs des revendications précédentes, dans lequel ledit connecteur femelle (6) et ledit connecteur mâle (7) comprennent chacun un bord de contact (11) complémentaire l'un à l'autre.

5. Système (1) selon la revendication précédente, dans lequel au moins l'un entre ledit connecteur femelle (6) et ledit connecteur mâle (7) comprend un élément de type joint d'étanchéité (12) intercalé en contact entre lesdits bords de contact (11), la configuration étant telle que dans ladite position de fonctionnement lesdits bords de contact (11) transmettent des forces de compression sur ledit élément de type joint d'étanchéité (12).

6. Système (1) selon l'une ou plusieurs des revendications précédentes, dans lequel ladite partie de base (2) comprend un étrier de support (13) sur celui-ci ledit connecteur femelle (6) est attaché, relevé par rapport audit plan d'appui et conçu pour transmettre des contraintes de charge provenant dudit connecteur femelle (6) audit plan d'appui.

7. Système (1) selon la revendication précédente, dans lequel ledit étrier de support (13) a une forme semblable à U retourné.
